# EUROPÄISCHE PATENTSCHRIFT

(11) **EP 1 591 780 B1**
(45) Veröffentlichungstag und Bekanntmachung des Hinweises auf die Patenterteilung: **13.11.2013**
(21) Anmeldenummer: 05009247.7
(22) Anmeldetag: 27.04.2005
(51) Int. Cl.: G01N 27/403

(54) **Sensor für die Detektion von Flüssigkeiten, und diesen Sensor enthaltende Detektionsvorrichtung**
Sensor for detecting fluids, and detection device comprising this sensor
Capteur pour la détection des fluides, et dispositif de détection comprenant ce capteur

(30) Priorität: 28.04.2004 DE 102004020829
(43) Veröffentlichungstag der Anmeldung: 02.11.2005
(73) Patentinhaber: Fraunhofer-Gesellschaft zur Förderung der angewandten Forschung e.V., 80686 München (DE)
(72) Erfinder: Hintsche, Rainer, 13127 Berlin (DE)
(74) Vertreter: Olgemöller, Luitgard Maria

(56) Entgegenhaltungen:
- US-A- 5 063 081
- US-A- 6 123 820
- US-B1- 6 662 439
- HINTSCHE R ET AL: "Chip biosensors on thin-film metal electrodes", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, Bd. 4, Nr. 3-4, 1. Juni 1991 (1991-06-01), Seiten 287-291, XP026553333, ISSN: 0925-4005, DOI: 10.1016/0925-4005(91)80124-3 [gefunden am 1991-06-01]

## Beschreibung

Die vorliegende Erfindung bezieht sich auf einen Sensor mit einem elektrochemischen Sensorarray insbesondere in Form eines Elektrodenareals und auf eine Vorrichtung zur Anwendung in der chemischen oder der biochemischen Analytik. Der Sensor lässt sich zusammen mit Kontaktelementen und geeigneten Fluidverbindungen als Detektionseinheit nutzen, mit der als Teil einer Detektionsvorrichtung Bestandteile von Analyseflüssigkeiten elektrochemisch detektiert werden können. Der Sensor ist im Vergleich zu bekannten Sensoren dieser Art wesentlich kostengünstiger herstellbar. Sowohl die elektrischen als auch die fluidischen Verbindungen lassen sich sehr leicht herstellen und wieder lösen, sodass er auch als austauschbares Einwegelement in diagnostischen Analysegeräten eingesetzt werden kann. Auch ist seine Handhabung sehr bequem.

Die Mikrosystemtechnik und Mikrosensorik hat in den letzten 20 Jahren eine Fülle von biochemischen Chipsensoren entwickelt, die zu einem beträchtlichen Fortschritt in der miniaturisierten Analytik geführt haben. Insbesondere sind hier die auf optischen und elektrochemischen Prinzipien basierende Chipsensoren zu nennen, die mit Technologien aus der Halbleiterfertigung hergestellt werden. Die Verwendung von portablen Geräten für chemische und biochemische Analysen mit solchen Einwegsensoren erfordert einen flexiblen Wechsel des Sensorelements und ggf. zugehöriger Reagenzien. Dabei haben die optischen Systeme produktionstechnische Umsetzung und Markteinführung bereits erfolgreich durchlaufen, aber die meisten elektrischen Systeme sind bisher nicht über das Labormusterniveau hinausgekommen. Während optisch-chemische oder optisch-biochemische Sensorsysteme und optische Biochips kontaktlos mit Lichtstrahlen ausgelesen werden können, muss bei elektrochemisch basierten Chip-Systemen auf dem sehr kleinen Raum einer Chipoberfläche die notwendige elektrische Ankopplung zu entsprechenden Messinstrumenten und die fluidische Ankopplung für die Zuführung von Proben und Flüssigkeit bzw. Reagenzien gleichzeitig realisiert werden.

Aus US 5,063,081 A ist ein Biosensor bekannt, der vor allem für die Messung von Glukose einsetzbar ist. Er besitzt ein Sensorelement, z.B. einen Silizium-Chip, das sich auf einem Substrat befindet. Der Sensor weist Elektroden-Arrays auf, die über Kontaktverbindungen mit Ableitflächen in derselben Ebene verbunden sind. Die Elektroden sind mit einer oder mehreren Schichten versehen, darunter einer permselektiven oder semipermeablen Schicht, auf der sich eine "Biolayer" mit aktivem Enzym befindet. Der gesamte Sensor-Aufbau wird von einer Schicht umhüllt, die dazu vorgesehen ist, dass der Analyt in kontrollierter Menge zur Schicht mit dem aktiven Enzym gelangt.

Bei Einsatz planarer elektrochemischer Sensoren, wie z.B. elektrochemischer Sensoren und Feldeffekt-Transistoren in Siliziumtechnologie oder auch elektrochemischer Sensoren auf polymeren Trägern oder solchen aus Glas, erfordert ein ggf. erforderlich werdender Austausch die gleichzeitige Herstellung bzw. Lösung dieser elektrischen und fluidischen Kontakte. Die elektrische Ankopplung wird in der Regel durch kostenaufwendige Kontaktierung mittels Bonddrähten von den elektrischen Ableitflächen auf den Sensoren oder Chips zu den Leiterbahnen auf konventionellen Leiterplatten bzw. zu den Leiterbahnen auf speziellen Trägem wie Glas oder Polymeren realisiert. Aus dem US-Patent 5,096,669 ist ein System bekannt, bei dem streifenförmige elektrische Kontakte am Rande mehrer elektrochemischer Planarsensoren als Steckkontakte zur reversiblen Herstellung der elektrischen Ableitungen genutzt werden. Der Nachteil dieses Systems besteht in der Notwendigkeit, elektrische Steckverbinder am Rande eines kleinen planaren Siliziumsensors anzuordnen, der mechanischen Instabilität der Kante der Si-Chips und einer ungünstigen Lage der Chips am Rande von Trägersystemen. Die notwendige fluidische Probenzuführung ist in diesem System durch einen Durchflußkanal realisiert, der über den aktiven Sensorbereich der Chips geführt wird, so dass große Teile der kostbaren Chipoberfläche zur dauerhaften Abdichtung verwendet werden müssen und nicht anderweitig zur Verfügung stehen.

Ein anderes System offenbart die eine Diagnoseeinrichtung betreffende Patentanmeldung der Firma Siemens DE 101 11 457 A1. Hier befindet sich ein Sensor oder Chip eingebettet in ein Substrat, durch das ein oder mehrere sich zur Substratoberfläche hin öffnende Durchflusskanäle verlaufen, derart, dass das Fluid unter dem Sensor entlang fließt. Das den Chip und die fluidischen Leitungen beherbergende Substrat wird als Applikator bezeichnet. Die fluidische Ankopplung erfolgt z.B. durch abdichtendes Aufsetzen eines Oberteils, das ebenfalls Fluidik-Kanäle besitzt, die mit den Zu- und Ableitungen im Applikator genau zur Passung kommen. Das Oberteil ist Teil eines Auslesegerätes.

Die nötige elektrische Verdrahtung und Verpackung des Sensors ist im Detail in der DE 10 111 458 A1 derselben Anmelderin beschrieben, in der ein Modul für eine Diagnoseeinrichtung offenbart ist. Die Aufgabenstellung der Erfindung dieser Anmeldung wird damit angegeben, dass die Verschwendung von aktiver Sensoroberfläche, wie es bei der in der US 5,096,669 beschriebenen Vorrichtung der Fall ist, vermieden werden soll und kostengünstige Produkte hergestellt werden können. Dies lasse sich insbesondere dadurch realisieren, dass sich das Gehäusekonzept so weit wie möglich an der klassischen Mikroelektronik orientiere. Dementsprechend werden die Sensoren als Chip-Modul mit elektrischen Leitungen zu einem Träger in Draht-Bond-Technologie realisiert. Doch die Nachteile dieser halbleitertypischen Technologie sind teure Leiterkarten und kostenaufwendige Bondtechnologien. Häufig müssen die instabilen Bonddrähte auch noch durch sogenannte Verkappung mit härtbaren Polymeren stabilisiert werden.

Ähnlich aufgebaut sind auch die Chipsensoren mit fluidischen Systemen und Ableitkontakten in diagnostischen Modulen im System der Firma Nanogen, San Diego USA, (siehe die Anmeldungen US 2004/038420 A1 und WO 98/24544 A1). Hier werden Ableitkontakte an allen Seiten eines elektrischen Sensorchips mit Bonddrähten kontaktiert, während die Elektroden des Chips in einer Durchflußkammer angeordnet sind. Nachteil dieser Einrichtung sind vergleichsweise hohe Fertigungskosten.

In der bereits erwähnten DE 101 11 458 A1 findet sich ein anhand einer Figur 6 beschriebener Vorschlag, der von den übrigen dort genannten Ausführungsformen dadurch abweicht, dass weder die Fluidkanäle noch die elektrischen Verbindungen durch das den Chip oder Sensor tragende Substrat geführt werden. Eine Durchflusskammer wird statt dessen dadurch gebildet, dass ein Oberteil derart auf das den Sensor enthaltende Substrat aufgesetzt wird, dass oberhalb des Sensors eine Kammer entsteht. Zufluss- und Abflusskanäle im Oberteil ermöglichen den Durchfluss von Flüssigkeit durch diese Kammer, die seitlich neben dem Chip durch Dichtringe gegen ungewünschtes Austreten von Flüssigkeit gesichert ist. Auch hier erfolgt eine elektrische Ableitung vom Chip zum Träger, und zwar seitlich neben dem Chip. Der Chip liegt auf einem Träger im Kartenkörper und ist durch klassische Hilfsmittel der Flip-Chip-Technologie in den Kartenkörper eingepasst. Dazu gehören ein PI-Ring, ein Underfill und ein sog. Bump. Die elektrische Ableitung vom Chip erfolgt über leitfähige Komponenten, die zwischen dem Bump und einer dem Dichtring des Oberteils gegenüberliegenden Isolierung hindurch und dann zur Oberfläche des Substrats geführt werden, wobei sie auf Trägermateral aufliegen und durch weitere Komponenten gestützt werden. Dort kommen sie mit sogenannten Kontaktköpfen des Oberteils in Berührung, die mit federnd aufsetzbaren elektrischen Kontakten versehen sind. Zwar ist in dieser Ausgestaltung die Fertigung des Substrats wesentlich unaufwendiger; statt dessen sind jedoch komplexe Bauteile und Maßnahmen notwendig, um die fest installierte elektrische Ableitung vom Sensor oder Chip zu den Kontaktköpfen zu realisieren.

Die bisher vorgeschlagenen chemisch-biochemische Analysesysteme mit elektrochemischen Sensoren sind aufgrund der vorstehend erläuterten Baustrukturen bei den zu erwartenden, für die Si-Technologie relativ geringen Stückzahlen nur unter vergleichsweise hohen Fertigungskosten zu realisieren. Sie sind im allgemeinen zu teuer, um als Einzelanalysen-Komponenten oder gar Einwegmaterialien eingesetzt zu werden.

Aufgabe der Erfindung ist es, eine Detektionseinheit für die Detektion von Inhaltsstoffen von Flüssigkeiten bereitzustellen, deren elektrochemischer Sensor wesentlich kostengünstiger herzustellen ist als bisherige Sensoren. Seine elektrischen Zu- und Ableitkontakte sollen dabei leicht lösbar sein, um ihn leicht handhaben und ggf. auch als Einmalkomponente in einem Analysesystem einsetzen zu können. Die Detektionseinheit soll so ausgestaltet sein, dass sie zusammen mit dem genannten Sensor Inhaltsstoffe von Flüssigkeiten elektrochemisch detektieren kann.

Die Aufgabe wird durch die Bereitstellung einer Detektionseinheit nach Anspruch 1 gelöst. Der Sensor dieser Einheit ist in der Lage, Inhaltsstoffe von Flüssigkeiten mit Hilfe eines Elektroden-Sensorarrays zu detektieren. Er weist ein Trägerelement und ein darauf angeordnetes, planares oder im Wesentlichen planares Sensorelement auf, auf dessen Oberfläche sich das Sensor-Array befindet. Die Elektroden des Sensor-Arrays sind über elektrisch leitende Verbindungen mit ebenfalls auf der Oberfläche des Sensorelements befindlichen Ableitflächen verbunden, aber ansonsten ohne elektrische Verbindung zum Trägerelement. Das Sensorelement ist in Siliciumtechnologie gefertigt. Günstig ist es, ein Silizium-Chip zu verwenden. Das Trägerelement kann ein billiger, unstrukturierter und kontaktloser Träger sein.

Vorzugsweise bilden dünne, elektrisch leitende Metallschichten auf dem Sensorelement sowohl die Elektroden als auch die Ableitflächen. Sie können in Dünnschichttechnologie gefertigt sein, z.B. eingelegt in die Chipfläche oder aufgesputtert oder aufgedampft. Auch die elektrisch leitenden Verbindungen oder Kontakte können in dieser Technologie hergestellt sein. Dabei können alle drei für die Elektrik benötigten Teile integral gefertigt werden. Sie befinden sich dann in der Regel auf einer horizontalen Ebene.

Die elektrische Verbindung zwischen Elektrode und Ableitfläche kann frei auf der Oberfläche des Sensorelements liegen. Vorteilhaft ist es jedoch, sie gegen die Oberfläche des Sensorelements zu isolieren. Dies kann beispielsweise durch Aufbringen eines anorganischen, anorganisch-organischen oder organischen isolierenden Materials, z.B. von Siliziumoxid oder einem Silicium-Oxynitrid oder einem Kunststoff wie z.B. einem Lack, erfolgen. Stattdessen kann die elektrisch leitende Verbindung zwischen Elektroden und Ableitflächen in halbleiterüblicher Technologie z.B. über CMOS-Schaltungen hergestellt werden. Dabei erfolgt die elektrische Verbindung von den Elektroden in das Siliziummaterial hinein durch eine isolierende Zwischenschicht zu chipüblichen Strukturen wie z.B. Transistorschaltungen in CMOS-Technologie, die z.B. als aktive Meßschaltungen für jede Arrayelektrode arbeiten können. Von diesen integrierten Strukturen wird wieder eine elektrische Durchführung an die Oberfläche zu den Ableitflächen eingerichtet. Die fluidische und die elektrische Ankopplung ist damit für beide Sensortypen identisch.

In beispielhaften Ausgestaltungen, z.B. wenn klassische Si-Dünnfilmtechnologie für seine Herstellung eingesetzt wird, kann das Sensorelement Abmessungen im Bereich von etwa 3x3 mm bis 10×10 mm aufweisen. Davon werden üblicherweise ca. 1 x3 mm für das Elektrodenareal (Elektrodenarray) verwendet. Die Form der metallischen Ableitflächen kann beliebig gewählt werden; sie können z.B. kreisförmig oder rechteckig sein. Ihre Dimensionen liegen üblicherweise im Bereich von ca. 0,1 mm² bis 2mm², vorzugsweise bis 1mm². Es soll aber betont werden, dass dies alles nur Beispiele sind; die Größe des Sensors und seiner Bestandteile kann natürlich entsprechend der vorgesehenen Verwendungsart frei gewählt werden.

Die Anzahl der im Sensor-Array vorhandenen Elektroden kann entsprechend dem vorgesehenen Zweck frei gewählt werden. Günstig ist es, mehrere gleichsinnige Elektroden vorzusehen, um mehrere Untersuchungen (sei es zur Detektion verschiedener Substanzen, sei es zur Untersuchung verschiedener Proben auf dieselbe Substanz) gleichzeitig bzw. parallel vornehmen zu können. Die für elektrochemische Sensoren üblichen Hilfselektroden, z.B. Gegen- und/oder Referenzelektroden, können ebenfalls auf den Sensoren angeordnet werden.

Der Sensor ist mit der Abdeckung kombiniert, mit der zusammen er die Detektionseinheit bildet, die in Verbindung mit einem Analysengerät als Detektionsvorrichtung Inhaltsstoffe von Flüssigkeiten, insbesondere von solchen biologischer Herkunft, detektieren kann.

Die Abdeckung ist so ausgestaltet, dass sie zusammen mit dem Sensor einen oder ggf. mehrere Hohlräume über dem Teil der Oberfläche des Sensorelements bildet, auf dem sich die Fläche oder zumindest eine Teilfläche einer oder mehrerer Elektroden (letzterer Fall z.B. für die Untersuchung eines Fluids auf mehrere Inhaltsstoffe) befindet. Mindestens ein Flüssigkeitskanal in der Abdeckung schafft eine Flüssigkeitsverbindung von mindestens einem der Hohlräume durch die Abdeckung hindurch. Dieser Flüssigkeitskanal kann mit Vorrichtungen zum Zuführen und Absaugen von Flüssigkeiten in den jeweiligen Hohlraum verbunden werden oder kann mit einem Septum verschlossen sein, das sich mit einer Hohlnadel durchstechen lässt, um Flüssigkeit einzuführen oder abzuziehen. Alternativ können zwei Flüssigkeitsverbindungen pro Hohlraum vorgesehen sein, von denen eine als Zufluss und eine als Abfluss fungiert. Der Sensor kann mit der Abdeckung zusammen dann als Durchfluss-Messzelle genutzt werden.

Zusätzlich kann auch ein größerer Hohlraum in der Abdeckung als Sammelgefäß für nicht mehr benötigte Meß- und/oder Probenflüssigkeiten ausgebildet sein und ggf. mit Druck-Ausgleichsöffnungen nach außen versehen werden.

In einer anderen Ausbildung können Hohlräume und Kanäle wahlweise auch in dem Sensorträger mit Verbindung zu Hohlräumen und oder Kanälen in der Abdeckung angeordnet werden.

Auf dem Sensor selbst ist in der Regel nur das Elektrodenareal (Sensor-Array) für den Kontakt mit Flüssigkeit vorgesehen. Die elektrische Verbindung zwischen den Elektroden und den Ableitflächen sollte dagegen davon freigehalten werden. Entweder auf dem Sensor und/oder auf der Abdeckung sind deshalb in bevorzugter Weise Dichtungselemente vorgesehen. Insbesondere dann, wenn der Sensor als Einwegmaterial, die Abdeckung aber wiederholt verwendet werden sollen, ist es wünschenswert, den Sensor von allen nicht unbedingt notwendigen Komponenten freizuhalten und diese ggf. in die Abdeckung zu integrieren. Deshalb ist es bevorzugt, dass die Dichtungselemente an der Abdeckung angebracht sind. Es kann sich dabei beispielsweise um O-Ringe oder Dichtfolien handeln. In ganz bevorzugter, aber nicht zwingender Weise sind der Hohlraum und die Dichtungselemente so gestaltet, dass die Flüssigkeit nur die Elekrodenoberfläche berühren kann, aber keine sonstigen Sensorelement-Oberflächen. Die Dichtungselemente setzen dann bevorzugt auf den Randbereichen der Elektrodenflächen oder dicht daneben auf.

Die Abdeckung weist außerdem elektrische Kontaktelemente zur Herstellung lösbarer elektrischer Verbindungen auf, die mechanisch auf die Ableitflächen des Sensors aufgesetzt werden können. Über diese elektrischen Kontaktelemente können die Elektroden auf der Oberfläche des Sensorelements von außen abgefühlt werden. Die Zahl der Kontaktelemente entspricht in der Regel der Zahl der Ableitflächen und damit der Elektroden.

Die Abdeckung sollte so ausgestaltet sein, dass ihre Verbindung mit dem Sensor wieder gelöst werden kann. Zu diesem Zweck kann sie beispielsweise eine Klapp-, Hebel- oder Klickvorrichtung umfassen, mit der sie mit dem Sensor verbunden und von ihm getrennt werden kann. Diese kann mit dem Träger verbunden sein oder integraler Bestandteil des Trägers sein. Alternativ wird sie ausschließlich durch Druckkräfte auf dem Sensor gehalten.

Die elektrischen Kontaktelemente bestehen im einfachsten Fall aus einem Metallstift, der mechanisch auf die Kontaktfläche gedrückt wird und der reversibel beliebig oft wieder gelöst werden kann. Dadurch wird die sonst übliche fest installierte Kontaktierung z.B. Bondung der metallischen Ableitflächen auf den Chips zu Leiterbahnen auf Chipträgern bzw. Substraten überflüssig. Vorteilhaft ist auch die Verwendung von gefederten Nadelkontakten, die in verschiedenen Ausführungen z.B. mit Durchmessern von 0,8mm erhältlich sind, als Kontaktelement. Ebenso können einfache Federkontakte, wie sie in Miniatursteckern Verwendung finden, zur direkten elektrischen Kontaktierung angewendet werden.

In einer besonderen Ausgestaltung der Erfindung finden folienartige elektrisch leitende Kunststoffe oder auch elastische Kunststoffe mit metallisch leitenden Strukturen als reversible Mikrokontakte Verwendung.

In allen diesen Fällen können die Kontaktelemente gegebenenfalls zusammen oder in Gruppen von einem isolierenden Halter gehalten werden.

Auf Wunsch können die elektrischen Kontaktelemente oder ein Teil oder eine Gruppe davon auch zusammen mit dem bzw. den Flüssigkeitskanälen der lösbaren Abdeckung in einer gemeinsamen mechanischen Halterung angeordnet sein.

In einer alternativen grundlegenden Ausgestaltung der Erfindung ist das Abdeckungselement bereits Bestandteil des Sensors und mit diesem fest verbunden. Es bildet mit einer entsprechenden Oberfläche des Sensorelements den Hohlraum, in dem sich die Fläche oder eine Teilfläche mindestens einer der Elektroden, aber keine Ableitfläche befindet. Der Hohlraum kommuniziert mit einer Befüllungsöffnung für Flüssigkeiten. Bezüglich der Zahl und Anordnung des oder der Hohlräume und des darunter liegenden Elektrodenareals gilt das gleiche, was oben für den bzw. die Hohlräume aus Sensor und lösbarer Abdeckung gesagt wurde. In vergleichbarer Weise kann auch zusätzlich eine Flüssigkeits-Ableitung im Abdeckungselement vorgesehen sein, um die Kombination aus Sensor und fest installiertem Abdeckungselement nach Art einer Durchflusszelle betreiben zu können.

Das Abdeckungselement ist auf dem Trägerelement und/oder auf dem Sensorelement befestigt, beispielsweise durch Klebeverbindungen oder Heißsiegeln oder elastische Dichtungen. Durch diese Befestigung ist insbesondere der Hohlraum über den Elektroden gegen die restliche Sensorfläche abgedichtet und sind somit die elektrischen Ableitflächen vor Kurzschlüssen geschützt. Im Bereich der Ableitfläche(n) weist das Abdeckungselement eine Aussparung auf, so dass die Ableitflächen von oben offen zugänglich sind.

Nachteil dieser Ausgestaltung ist, dass der Aufwand zur Herstellung des Sensors höher ist, indem ein zusätzliches Teil, z.B. in konventioneller Spritzguss-Technologie gefertigt und montiert werden muss. Sie besitzt aber besondere Vorteile. So können innerhalb des Abdeckungselements Strukturen vorgesehen sein, die die Anzahl der erforderlichen Arbeitsschritte für die Detektion senkt und das Vorhalten von standardisierten Messlösungen und/oder die jeweils frische Herstellung wenig stabiler Lösungen überflüssig macht. So kann zwischen der oder einigen oder jeder Befüllungsöffnung und dem Hohlraum ein Befüllungskanal vorgesehen sein, der Vorratsnischen zur Aufnahme von Vorratsreagenzien aufweisen kann.

Die Vorratsreagenzien können flüssig sein. Alternativ sind sie, fest und können beim Befüllungsvorgang aufgelöst und in den Hohlraum über den Elektroden transportiert werden. Hier oder vorher können chemische oder biochemische Reaktionen, die für den analytischen Vorgang, z.B. ein biochemisches Assay, notwendig sind, stattfinden. Optional sind Befüllungsöffnungen, Befüllungskanäle und Hohlräume für flüssige und/oder feste Reagenzien mehrfach in der Abdeckung vorhanden.

Die Bereitstellung von baugleichen Sensoren mit verschiedenen Reagenzien im Einwegelement ermöglicht die kosteneffektive Bestimmung verschiedener Zielsubstanzen, wie sie vor allem in der biochemischen Analytik mit ihrer großen Zahl von molekularen Alternativen und Affinitätsbindungen gefordert ist.

Die Hohlräume können typischer Weise z.B. Volumina zwischen 1-100µl haben, während die Befüllungskanäle in der Regel Durchmesser zwischen 0,1 - 0,5mm haben. Probenvolumina und Flüssigkeitsportionen sind auf diese Dimensionen bezogen typischerweise 1 - 500µl groß. Die übrigen Dimensionen entsprechen den Werten, die für die oben beschriebene Kombination von Sensor und lösbarer Abdeckung angegeben sind.

Wenn die Vorratsreagenzien flüssig sind, können Gase zu ihrem Transport verwendet werden. Alternativ kann eine elastische Membran in der Abdeckung über dem oder den Hohlräumen angebracht sein, die für einen hydraulischen Transport von in den Vorratsnischen gelagerten Flüssigkeiten verwendet werden kann. Wenn die Vorratsreagenzien fest sind, können sie beim Befüllen der Kanäle aufgelöst werden. Vor allem für derartige Fälle ist die erwähnte alternative grundlegende Ausgestaltung mit Flüssigkeits-Ableitung für den Hohlraum über einer/mehreren/allen Elektroden bzw. Teilbereichen dieser Elektroden , aber ggf. auch anderen, zusätzlichen Hohlräumen bzw. Kanälen günstig, um so in einfacher Weise Reaktions-, Spül- und Messschritte vornehmen zu können.

Wird ein Sensor gemäß der alternativen Ausgestaltung der Erfindung eingesetzt, ist das einzig zwingend erforderliche zusätzliche Element für die gesamte Detektionseinheit im obigen Sinne ein elektrisches Kontaktelement pro Ableitfläche des Sensors, das mechanisch auf diese aufgesetzt werden kann. Die Flüssigkeitszu- und Abführung muss nicht im selben Element untergebracht sein, das diese(s) Kontaktelement(e) hält. Es ist aber möglich, einen Träger hierfür vorzusehen, der außerdem die entsprechende Anzahl von Durchflusskanälen aufweist, die für die Versorgung des bzw. der die Messzelle(n) bildenden Hohlraums/Hohlräume notwendig sind. Diese Durchflusskanäle sind in bevorzugter Weise mit Dichtungselementen versehen, um z.B. beim Zusammendrücken der genannten Teile eine lösbare, aber dichte Verbindung zwischen Durchflusskanal und Befüllungsöffnung zu gewährleisten. Alternativ können sie beispielsweise als Schlauch ausgestaltet sein, der auf die Befüllungsöffnung der Abdeckung aufgesteckt werden kann oder umgekehrt.

Auch bei dieser Ausgestaltung der Erfindung können die oben angeführten optionalen Ausführungen realisiert sein, z.B. eine oder mehrere Halterungen für die elektrischen Kontaktelemente und/oder den/die Durchflusskanäle, das Vorsehen einer Klapp-, Hebel- oder Klickvorrichtung oder dergleichen.

Die beigefügten Figuren zeigen beispielhafte Ausgestaltungen der Erfindung, wobei
**Fig. 1**: den Schnitt durch ein Sensor-Array mit mechanischem Element zur Herstellung lösbarer elektrischer Kontakte in Kombination mit einer lösbaren Abdeckung zur Befüllung mit Flüssigkeiten zeigt,
**Fig. 2**: die Draufsicht auf ein Sensor-Array auf einem Trägerelement und ein zugehöriges mechanisches Element zur gleichzeitigen Herstellung elektrischer Kontakte neben einer Abdeckung zur Befüllung mit Flüssigkeiten zeigt, und
**Fig. 3**: den Schnitt durch ein Sensor-Array mit einer fest fixierten Abdeckung und ein zugehöriges mechanisches Element zur gleichzeitigen Herstellung elektrischer Kontakte neben der Befüllung mit Flüssigkeiten zeigt.

Mit der erfindungsgemäßen Kombination aus Sensor und Abdeckung lässt sich ein System schaffen, das insbesondere den raschen Austausch der vor allem in der biochemischen Analytik als Einwegelemente benötigten elektrochemischen Sensor-Arrays ermöglicht. Durch Herstellung lösbarer elektrischer Verbindungen direkt auf dem Sensorelement selbst können bisher notwendige fest installierte elektrische Verbindungen zwischen dem Sensorelement und dem Träger, wie man es von Si-Chips auf Leiterkarten oder anderen Leiterbahnen, z.B. in Form von Bondverbindungen, kennt, entfallen und damit erheblicher technologischer Aufwand eingespart werden, wobei gleichzeitig auch die Realisierung der Zu- und Ableitung zu bzw. von den Elektroden extrem einfach gestaltet ist. Erfindungsgemäß lässt sich ein Sensorelement in einfacher Dünnfilm- Chiptechnik realisieren, was außer den besonders geeigneten Si-Chips auch die Verwendung einfacher und kostengünstiger Materialien (z.B. Glas, Keramik, Kunststoff, Papier, Pappe, Leiterkarten, flexible Gewebe enthaltende Träger u.a.) anstelle bisher benutzter aufwendiger Leiterkarten oder Leiterbahnen auf sogenanntem Flextape oder Scheckkarten-Technologie ermöglicht.

Das Problem aller elektrochemischen Sensorelemente ist, einen Flüssigkeitstransport für die Probenzufuhr gleichzeitig in engster Nachbarschaft zu elektrischen Kontakten und auf einem vergleichsweise kleinen Si-Chip realisieren zu müssen. Eine Lösung beider Probleme wird erfindungsgemäß durch abgedichtete Abdeckungen über aktiven Teilen des Sensorarrays in Kombination mit einer reversiblen elektrischen Kontaktierung direkt auf der Sensorfläche selbst bewirkt.

Bei der Erfindung wird mit Hilfe der Abdeckung ein Hohlraum über den elektrochemischen aktiven Chipelementen, den elektrochemische Sensoren, realisiert, der als Messzelle dient. Mittels Abdichtung an geeigneter Stelle wird die Flüssigkeits-und Probenzufuhr nur auf die sensorischen Elemente begrenzt, während die zum Zweck der Kontaktierung offenen elektrischen Kontaktflächen des Chips geschützt sind. Dies wird entweder durch die mit einer Abdichtung versehene Abdeckung selbst oder eine dichtende Klebung der Abdeckung und ein mit Abdichtungen versehenes zusätzliches Element zur Flüssigkeitszufuhr ermöglicht. Durch Aussparungen in dieser Abdeckung wird eine direkte elektrische Kontaktierung der elektrischen Ableitflächen auf dem Sensor-Array mittels mechanischer Elemente ermöglicht.

Eine weitere vorteilhafte Anwendungsmöglichkeit der Erfindung ist die oben beschriebene Ausbildung weiterer Hohlräume in der Abdeckung, die mittels Kanälen verbunden sind. Dabei können die Hohlräume zur Aufnahme von festen und / oder flüssigen Reagenzien benutzt werden. Über eine oder mehrere Öffnungen in der Abdeckung wird die Flüssigkeitszufuhr genutzt, um Reagenzien aufzulösen und in der Abdeckung zum elektrochemischen Sensor-Array zu transportieren und auf diese Weise chemische oder biochemische Reaktionen zu steuern. Die Öffnungen können auch mit einem Septum bedeckt sein, das mit einer Hohlnadel zum Einbringen von Flüssigkeiten und Proben durchstochen wird.

Eine andere vorteilhafte Anwendungsmöglichkeit der Erfindung ist die Nutzung der Abdeckung zum pneumatischen Transport von Flüssigkeiten. Dazu werden bevorratete Flüssigkeiten und/oder Reagenzien in der Abdeckung durch Einbringen von Gasen in die Einfüllöffnung im Hohlraum- und Kanalsystem der Abdeckung transportiert.

Eine weitere vorteilhafte Anwendungsmöglichkeit der Erfindung ist die Nutzung der Abdeckung zum hydraulischen Transport von Flüssigkeiten. Dazu wird ein größerer Hohlraum in der verschlossenen Abdeckung mit einer elastischen Membran bedeckt. Durch mechanischen Druck von außen auf diese Membran werden in diesem Hohlraum bevorratete Flüssigkeiten und/oder Reagenzien über entsprechende Kanäle bzw. Hohlräume in der Abdeckung transportiert. Dabei werden ggf. Öffnungen durch die Abdeckung zum Druckausgleich im fluidischen System angebracht. In den Ausgestaltungen mit Abdeckungen können verbrauchte und nicht weiter benötigte Flüssigkeiten, z.B. nach Wasch- und Rektionsschritten im Durchfluss wieder entnommen oder in der Abdeckung selbst aufbewahrt werden. Dazu können in der Abdeckung spezielle Hohlräume ausgebildet und über Kanäle befüllbar als Abfallreservoir genutzt werden.

Durch die Erfindung wird das Problem reversibler elektrischer Kontaktierung ohne Bondung gelöst. Mittels verschiedener Arten von Nadel- oder Federkontakten, wie sie üblicherweise für Prüfzwecke in der Halbleitetechnologie verwendet werden, werden die Ableitflächen auf dem Chip direkt und reversibel kontaktiert. Die Lage und Größe dieser Ableitflächen auf dem Chip und ihr Abstand zur Abdeckung mit den Flüssigkeiten kann durch das Chipdesign angepasst werden. Die Kontakte werden den Arrays entsprechend einzeln oder in Gruppen verwendet und sind isoliert mechanisch miteinander verbunden.

Die erfindungsgemäße Kombination von fluidischer und elektrischer Chip-Ankopplung erlaubt einen einfachen Wechsel von elektrochemischen Sensor-Arrays und macht ihre Nutzung als Einwegsensoren, auch Disposibles genannt, möglich.

Weitere Einzelheiten und Vorteile der Erfindung ergeben sich aus der nachfolgenden Beschreibung von Ausführungsbeispielen anhand der beigefügten Figuren.

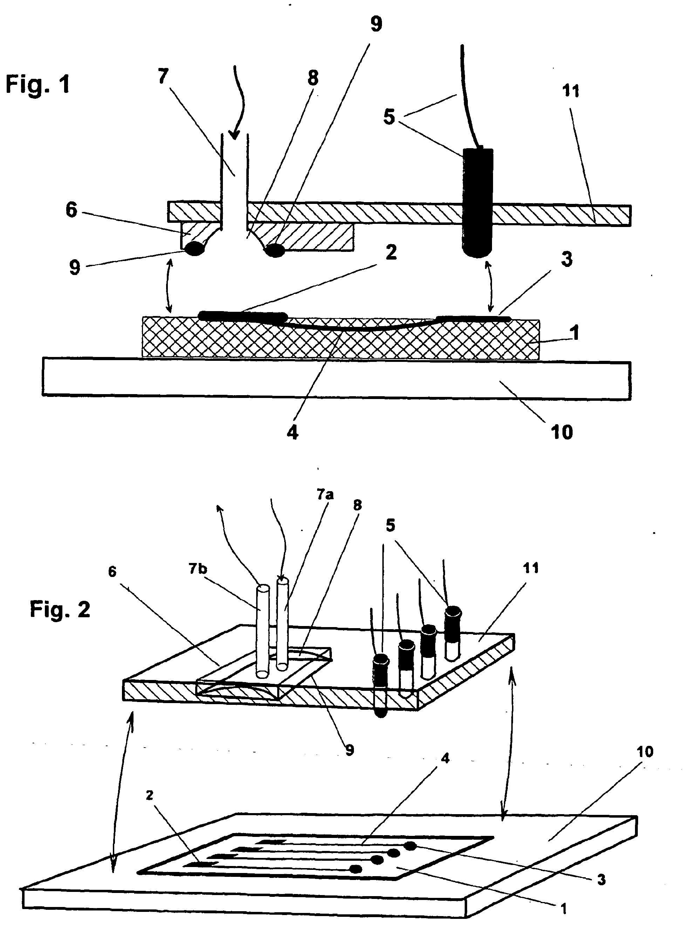

In Fig. 1 ist ein Sensor-Array mit mechanischem Element zur Herstellung lösbarer elektrischer Verbindungen und einer lösbaren Abdeckung zur Befüllung mit Flüssigkeiten schematisch im Schnitt dargestellt. Das Sensor-Array besteht aus dem eigentlichen planaren Sensorchip 1 in Si- oder Glastechnologie mit Dünnfilmelektroden 2 als elektrochemischen Sensoren auf der Oberfläche sowie metallischen Ableitflächen 3 ebenfalls in Dünschichttechnologie, wobei 2 und 3 durch eine elektrisch leitende Verbindung 4 miteinander in Kontakt stehen.

Mit 5 ist ein mechanisch bewegliches, elektrisches Kontaktelement zur Herstellung lösbarer elektrischer Verbindungen bezeichnet. Wesentlich ist erfindungsgemäß die Kombination dieser lösbaren elektrischen Kontakte auf dem Chip selbst mit einer gleichzeitigen Ankopplung von fluidischen Elementen. Die fluidische Ankopplung zu den als sensorische Elemente wirkenden Elektroden 2 wird in dieser Ausführung durch die Abdeckung 6 erreicht, die über einen Befüllungskanal 7 mit einem Hohlraum 8 über verbunden ist.

Der Schutz der elektrischen Kontakte vor Flüssigkeit wird durch Anpressen des Dichtungselementes 9 an den Chip realisiert. Das Dichtungselement 9 kann z.B. ein O-Ring oder eine Dichtungsfolie sein.

Das mechanische elektrische Kontaktelementes 5 wird mit dem fluidischen Element, bestehend aus den Teilen 6 - 9, mechanisch durch einen Träger 11 miteinander verbunden. 11 kann Teil einer einfachen Klapp- oder Hebel- oder Klickvorrichtung sein. Durch die Kopplung elektrischer und fluidischer Kontaktierung und die einfache Lösbarkeit vom Sensor-Array ist eine handhabungsfreundliche Auswechslung des Einwegchips zu realisieren. Die kosteneffektive erfindungsgemäße Anwendungslösung benötigt als Einwegteil nun nur noch einen billigen Träger, z.B. einen Polymerträger mit einem aufgeklebten Si-Chip. Die bisher benötigten teuren Leiterplatten und aufwendigen Bondprozesse zur elektrischen Chipkontaktierung können entfallen. Dies ist besonders von Vorteil für die Si-Chips in billiger Dünnfilmtechnologie, wo selbst eine Vergrößerung der benötigten Chipfläche zur Anpassung an die vorgeschlagene Lösung nur einen Bruchteil der eingesparten Material- und Montagekosten ausmacht.

In Fig. 2 ist die Draufsicht auf das Sensor-Array 1 in Si- oder Glastechnologie mit mehreren Dünnfilmelektroden 2, mit mehreren metallischen Ableitflächen 3 und den zugehörigen elektrisch leitenden Verbindungen 4 auf einem Chip-Träger 10 dargestellt. Der Chip-Träger 10 ist vorteilhaft aus Polymeren, organischen Kuststoffen, Glas oder auch Pappe gefertigt, ohne dass besondere Strukturen oder Vorkehrungen nötig sind. Die der Anordnung der Ableitflächen entsprechenden mechanischen Kontaktelemente 5 dienen in diesem Fall der Herstellung und Lösung mehrerer paralleler elektrischer Verbindungen. Sie sind im Träger 11, der aus z.B. Polymer oder Metall bestehen kann, isoliert voneinander befestigt. Unter dem Träger 11 ist die Abdeckung 6 montiert, die eine Aussparung 8 zur Bildung des Hohlraums aufweist. Der entstehende Hohlraum 8 wird mit der Dichtung 9, die wiederum im einfachsten Fall ein O-Ring ist, auf dem Sensor-Array 1 angepresst und somit abgedichtet. Die Flüssigkeitszufuhr zum Hohlraum 8 erfolgt über den Befüllungskanal 7a. Mit Hilfe des Befüllungskanal 7b kann die Flüssigkeit wieder entnommen und dadurch die Funktion einer konventionellen Durchflußzelle realisiert werden.

Die Hohlräume haben typische Volumina zwischen 1-100µl, während die Befüllungskanäle, z.B. als Stahlröhrchen ausgeführt und im Träger 11 befestigt, in der Regel Durchmesser zwischen 0,1 - 1 mm haben. Probenvolumina und Flüssigkeitsportionen sind auf diese Dimensionen bezogen typischerweise 1 - 500µl groß.

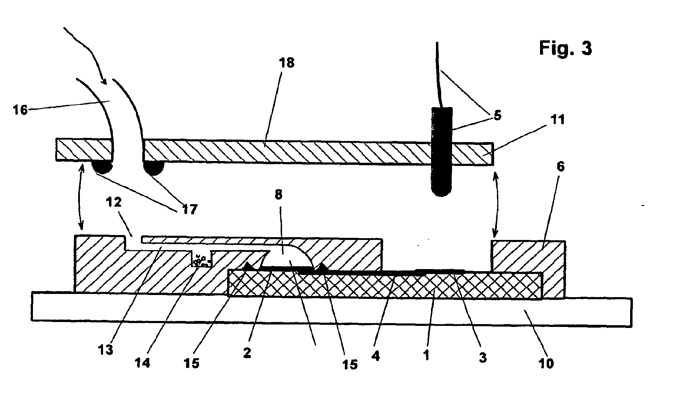

Eine andere Ausgestaltung ist in Fig. 3 als Schnitt dargestellt. Ein Sensor-Array 1 , das wie in Fig. 1 und 2 ausgeführt ist, wird auf dem Chip-Träger 10 z.B. mittels Klebung befestigt. Zusätzlich wird die Abdeckung 6 mittels Klebung 15 ebenfalls fest auf dem Chip-Träger 10 fixiert. Hier wird die Befüllung des Hohlraums 8 über den Elektroden 2 mit Flüssigkeiten über eine Befüllungsöffnung 12 und einen Befüllungskanal 13 und realisiert. Auf dem Verlauf des Befüllungskanals 12 ist ein Hohlraum 14 angeordnet, der feste oder flüssige Reagenzien enthält. Die festen Reagenzien werden beim Befüllungsvorgang aufgelöst und in den Hohlraum über den Elektroden transportiert. Hier oder vorher können chemische oder biochemische Reaktionen, die für den analytischen Vorgang, z.B. ein biochemisches Assay, notwendig sind, stattfinden. Optional sind Befüllungsöffnungen 12, Befüllungskanäle 13 und Hohlräume mit festen Reagenzien 14 mehrfach in der Abdeckung vorhanden. Zur Befüllung und Herstellung einer lösbaren fluidischen Ankopplung ist das Befüllungselement 16 vorgesehen, das mittels Abdichtungen 17 auf die Befüllungsöffnungen 12 angepresst wird. 16 kann ein Schlauch oder ein metallisches Röhrchen sein.

Die Herstellung lösbarer elektrischer Verbindungen wird mit analogen mechanischen Elementen 5 erreicht, die den in Fig. 1 und Fig. 2 dargestellten Elementen vergleichbar sind. Wesentlich bei dieser Ausführung ist, dass in der Abdeckung 6 Öffnungen ausgespart bleiben, die den ungehinderten Zugang der mechanischen Elemente 5 zu den metallischen Ableitflächen 3 auf dem Sensor-Array 1 ermöglichen.

Die Hohlräume haben typische Volumina zwischen 1-100µl, während die Befüllungskanäle in der Regel Durchmesser zwischen 0,1 - 0,5mm haben. Probenvolumina und Flüssigkeitsportionen sind auf diese Dimensionen bezogen typischerweise 1 - 500µl groß. Die übrigen Materialien und Dimensionen entsprechen den Werten, die für Fig. 1 und 2 genannt sind.

Auch bei dieser Ausbildung wird die gleichzeitige und kombinierte Ankopplung von Befüllungselementen und die Herstellung lösbarer elektrischer Verbindungen erfindungsgemäß dadurch realisiert, dass das Befüllungselement 16 und das Kontaktelement 5 zur Herstellung lösbarer elektrischer Verbindungen mechanisch fest miteinander verbunden werden. Dazu wird der Träger 11 z.B. als klappenförmiger Deckel oder hebelartige Vorrichtung ausgestaltet.

Es ist somit eine Einrichtung geschaffen, die die kosteneffektive Ausgestaltung und die einfache Handhabung elektrochemischer Sensor-Arrays als Einmalartikel in der chemischen und der biochemischen Analytik ermöglicht. Dadurch ist insbesondere die dezentrale Anwendung dieser Sensoren und ihr Einsatz in der vor Ort Analytik auch durch wenig ausgebildetes Bedienpersonal möglich.

## Patentansprüche

1. Detektionseinheit für die Detektion von Inhaltsstoffen von Flüssigkeiten mit einem Sensor, umfassend
- ein Trägerelement(10),
- ein in Siliziumtechnologie gefertigtes Sensorelement (1) auf dem Trägerelement (10),
- ein Sensorarray, das auf der Oberfläche des Sensorelements angeordnet ist und eine oder mehrere Elektroden (2) umfasst, die jeweils in elektrischem Kontakt (4) mit zugehörigen, ebenfalls auf der Oberfläche des Sensorelements (1) befindlichen Ableitflächen (3) stehen, aber im übrigen mit dem Trägerelement (10) elektrisch nicht in Verbindung stehen, wobei
die Elektroden (2) und die Ableitflächen (3) in die Sensorelement-Oberfläche eingelegt oder als dünne Metallschicht darauf abgeschieden sind, **dadurch gekennzeichnet, dass** die Detektionseinheit weiterhin eine Abdeckung umfasst, wobei der Sensor und die Abdeckung zusammen einen Hohlraum (8) über demjenigen Teil des Sensorelements bilden, auf dem sich die Fläche oder zumindest eine Teilfläche einer oder mehrerer der genannten Elektroden, aber keine Ableitfläche befindet, wobei die Abdeckung einen Flüssigkeitskanal zur Zuführung oder Absaugung von Flüssigkeit in den von Sensor und Abdeckung gemeinsam gebildeten Hohlraum aufweist.

2. Detektionseinheit nach Anspruch 1, **dadurch gekennzeichnet, dass** die elektrischen Kontakte (4) zwischen den Elektroden (2) und den Ableitflächen (3) in derselben horizontalen Ebene wie diese auf der Oberfläche des Sensorelements (1) realisiert sind.

3. Detektionseinheit nach Anspruch 1, **dadurch gekennzeichnet, dass** auch die elektrischen Kontakte (4) zwischen Elektroden (2) und Ableitflächen (3) in die Sensorelement-Oberfläche eingelegt bzw. als dünne Metallschicht darauf abgeschieden sind, derart, dass alle genannten Strukturen (2, 3, 4) gemeinsam oder in Folge und integral hergestellt sind.

4. Detektionseinheit nach einem der voranstehenden Ansprüche, **dadurch gekennzeichnet, dass** die elektrischen Kontakte (4) zwischen den Elektroden (2) und den Ableitflächen (3) durch ein isolierendes Material zur Oberfläche des Sensorelements (1) hin abgedeckt sind.

5. Detektionseinheit nach Anspruch 4, **dadurch gekennzeichnet, dass** die Isolierung als dünne Schicht auf den elektrischen Kontakten (4) realisiert ist.

6. Detektionseinheit nach Anspruch 4 oder 5, **dadurch gekennzeichnet, dass** das isolierende Material zur Oberfläche des Sensorelements (1) hin ein anorganisches Oxid wie SiO₂ oder ein Nitrid oder ein Oxynitrid wie Silizium-oxynitrid ist oder dass es ein organisches oder anorganisch-organisches Kunststoffmaterial ist.

7. Detektionseinheit nach Anspruch 1, wobei die elektrischen Kontakte (4) als integrierte Schaltungen im Sensorelement eingebettet sind.

8. Detektionseinheit nach einem der voranstehenden Ansprüche, worin die Abdeckung als ein mit dem Sensor fest verbundenes Abdeckungselement (6) ausgestaltet ist, das mindestens eine Befüllungsöffnung (12) aufweist.

9. Detektionseinheit nach Anspruch 8, wobei der Hohlraum (8) durch Dichtungselemente (15) gegen die anderen Teile des Sensors abgedichtet ist.

10. Detektionseinheit nach Anspruch 8 oder 9, **dadurch gekennzeichnet, dass** das Abdeckungselement (6) auf dem Trägerelement (10) und/oder auf dem Sensorelement (1) befestigt ist, insbesondere durch Klebeverbindungen, und im Bereich der Ableitflächen (3) eine Aussparung aufweist, so dass die Ableitflächen (3) offen liegen.

11. Detektionseinheit nach einem der Ansprüche 8 bis 10, **dadurch gekennzeichnet, dass** jede Befüllungsöffnung (12) über einen Flüssigkeitskanal (13) mit dem Hohlraum (8) in Verbindung steht, wobei der oder ein oder jeder Flüssigkeitskanal (13) optional mit einer oder mehreren Vorratsnischen (14) zur Aufnahme von Vorratsreagenzien ausgestattet ist.

12. Detektionseinheit nach einem der Ansprüche 8 bis 11, worin das Abdeckungselement mindestens einen Zuflusskanal (12, 13) und mindestens einen Abflusskanal aufweist.

13. Detektionseinheit nach einem der Ansprüche 1 bis 7, worin die Abdeckung als lösbare Abdeckung ausgestaltet ist, die mindestens einen Flüssigkeitskanal (7) für die Zuleitung sowie mindestens ein Kontaktelement (5) aufweist wobei jedes der Kontaktelemente (5) so angeordnet ist, dass es beim Verbinden von Sensor und Abdeckung in Kontakt mit einer entsprechenden Ableitfläche kommt.

14. Detektionseinheit nach Anspruch 12, **dadurch gekennzeichnet, dass** die Kontaktelemente (5) Nadelkontakte oder Federkontakte sind oder dass die Kontaktelemente (5) als starre Kontakte ausgebildet sind.

15. Detektionseinheit nach Ansprüche 13 oder 14, **dadurch gekennzeichnet, dass** die Abdeckung mindestens einen Zufluss- und mindestens einen Abflusskanal (7a, 7b) aufweist.

16. Detektionseinheit nach einem der Ansprüche 13 bis 15, **dadurch gekennzeichnet, dass** sich entweder auf dem Sensor und/oder an der Abdeckung mindestens ein Dichtungselement (9) befindet, das, ggf. zusammen mit weiteren Dichtungselementen, eine flüssigkeitsdichte Abdichtung des Hohlraums gewährleisten kann.

17. Detektionseinheit nach Anspruch 16, worin das Dichtungselement ein O-Ring oder eine Dichtungsfolie ist.

18. Detektionseinheit nach einem der Ansprüche 13 bis 17, **dadurch gekennzeichnet, dass** die Abdeckung einen Träger umfasst, durch den der oder die Flüssigkeitskanäle (7, 7a, 7b) hindurch treten und der die übrigen genannten Komponenten hält.

19. Detektionseinheit nach einem der Ansprüche 13 bis 18, **dadurch gekennzeichnet, dass** die Abdeckung eine Klapp-, Hebel- oder Klickvorrichtung umfasst, mit der sie mit dem Sensor verbunden und von ihm getrennt werden kann.

20. Detektionseinheit nach Anspruch 19, **dadurch gekennzeichnet, dass** die Klapp-, Hebel- oder Klickvorrichtung mit dem Träger (11) verbunden ist.

21. Detektionseinheit nach einem der Ansprüche 18 oder 20, **dadurch gekennzeichnet, dass** der Träger der Abdeckung eine Aussparung (8) aufweist, die Teil des Hohlraums (8) ist.

22. Detektionseinheit nach einem der Ansprüche 13 bis 20, **dadurch gekennzeichnet, dass** die Abdeckung mindestens ein Abdeckungselement (6) umfasst, durch das der oder die Flüssigkeitskanäle (7, 7a, 7b) hindurch treten und das zum Sensor hin eine Aussparung (8) aufweist, wobei die Kontaktelemente (5) beabstandet vom Abdeckungselement (6) angeordnet sind.

23. Detektionseinheit nach einem der Ansprüche 13 bis 21, **dadurch gekennzeichnet, dass** der oder die Flüssigkeitskanäle (7, 7a, 7b) durch ein Septum verschlossen sind, das mit einer Hohlnadel durchstochen werden kann.

24. Detektionseinheit nach einem der Ansprüche 8 bis 11 sowie
- mindestens ein Kontaktelement (5), wobei jedes der Kontaktelemente (5) so angeordnet ist, dass es in Kontakt mit einer entsprechenden Ableitfläche (3) des Sensors kommen kann.

25. Detektionseinheit nach Anspruch 24, worin die Kontaktelemente (5) an einem Träger (18) befestigt sind, der weiterhin mindestens einen Durchflusskanal (16) aufweist, derart, dass beim Verbinden von Sensor und Träger (18) jedes der Kontaktelemente (5) in Kontakt mit einer entsprechenden Ableitfläche kommen kann und jeder Durchflusskanal (16) mit einem Flüssigkeitskanal (12, 13) kommuniziert.

26. Detektionseinheit nach Anspruch 25, worin jeder Durchflusskanal (16) an seinem unteren Ende mindestens ein Dichtungselement (17) für ein lösbares, dichtendes Verbinden von Durchflusskanal (16) und Flüssigkeitskanal (12, 13) aufweist.

27. Detektionseinheit nach einem der Ansprüche 25 oder 26, **dadurch gekennzeichnet, dass** der Träger (18) eine Klapp-, Hebel- oder Klickvorrichtung umfasst, mit der er mit dem Sensor verbunden und von ihm getrennt werden kann.

28. Detektionseinheit nach einem der Ansprüche 25 bis 27, **dadurch gekennzeichnet, dass** jeder der Durchflusskanäle (16) mit einem Septum verschlossen ist, das mit einer Hohlnadel durchstochen werden kann.

29. Detektionseinheit nach einem der Ansprüche 24 bis 28, **dadurch gekennzeichnet, dass** die Kontaktelemente (5) Nadelkontakte oder Federkontakte sind oder dass die Kontaktelemente (5) als starre Kontakte ausgebildet sind.

## Claims

1. Detection unit for the detection of liquid ingredients having a sensor, comprising:
- a carrier element (10)
- a sensor element (1), prepared in silicon technology, on the carrier element (10),
- a sensor array which is disposed on the sensor element's surface and comprises one or more electrodes (2), each of the electrodes being in electrical contact with associated deflection surfaces (3), which are also situated on the surface of the sensor element (1) but are otherwise not in electrical connection with the carrier element (10), wherein
the electrodes (2) and the deflection surfaces (3) are laid into the sensor element's surface or are deposited on top thereof as a thin metallic layer, **characterized in that** the detection unit further comprises a cover, wherein the sensor and the cover together form a hollow space (8) above that part of the sensor element where there is the surface or a part of a surface of one or more of the said electrodes exposed, wherein the cover has at least one fluid channel for feeding or withdrawing liquid into the hollow space commonly formed by the sensor and the cover.

2. Detection unit according to claim 1, **characterized in that** the electrical contacts (4) are realized between the electrodes (2) and the deflection surfaces (3) in the same horizontal level as those on the surface of the sensor element (1).

3. Detection unit according to claim 1, **characterized in that** also the electrical contacts (4) between electrodes (2) and deflection surfaces (3) are laid into the sensor element's surface or are deposited ontop thereof as a thin metallic layer, respectively, such that all of the said structures (2, 3, 4) are manufactured together or consecutively and integrally.

4. Detection unit according to any of the preceding claims, **characterized in that** the electrical contacts (4) between the electrodes (2) and the deflection surfaces (3) are covered in the direction to the surface of the sensor element (1) by an insulating material.

5. Detection unit according to claim 4, **characterized in that** the insulation is present as a thin layer on the electrical contacts (4).

6. Detection unit according to claim 4 or 5, **characterized in that** the insulating material in the direction to the surface of the sensor element (1) is an inorganic oxide, e.g., SiO₂, or a nitride, or an oxynitride, e.g. silicon-oxynitride, or it is an organic or inorganic-organic plastic material.

7. Detection unit according to claim 1, wherein the electrical contacts (4) are embedded as integrated circuits in the sensor element.

8. Detection unit according to any of the preceding claims, wherein the cover has the form of a covering element (6) firmly attached to the sensor, comprising at least one filling aperture (12).

9. Detection unit according to claim 8, wherein the hollow space (8) is sealed from other parts of the sensor through sealing elements (15).

10. Detection unit according to claim 8 or 9, **characterized in that** the covering element (6) is fastened to the carrier element (10) and/or to the sensor element (1), especially by adhesive joints, and includes a recess in the area of the deflection surfaces (3), such that the deflection surfaces (3) are exposed.

11. Detection unit according to any of claims 8 to 10, **characterized in that** each of the filling apertures (12) is connected to the hollow space (8) via a fluid channel (13), while the or one or each of the fluid channels (13) is optionally equipped with one or more supply niches (14) for the incorporation of storage reagents.

12. Detection unit according to any of claims 8 to 11, wherein the covering element has at least one feeding channel (12, 13) and at least one draining channel.

13. Detection unit according to any of claims 1 to 7, wherein the cover is provided as a detachable cover which has at least one fluid channel (7) for feeding purposes and at least one contact element (5), wherein each of the contact elements (5) is situated such that it contacts a corresponding deflection surface upon connection of the sensor and the cover.

14. Detection unit according to claim 12, **characterized in that** the contact elements (5) are pin contacts or spring contacts, or **in that** the contact elements (5) are provided as rigid contacts.

15. Detection unit according to claim 13 or 14, **characterized in that** the cover has at least one feeding channel and at least one discharge channel (7a, 7b).

16. Detection unit according to any of claims 13 to 15, **characterized in that** a sealing element (9) is present either on the sensor and/or on the cover, the sealing element ensuring a liquid-tight sealing of the hollow space, optionally together with other sealing elements.

17. Detection unit according to claim 16, wherein the sealing element is an O-ring or a sealing film.

18. Detection unit according to any of claims 13 to 17, **characterized in that** the cover comprises a carrier through which the fluid channel(s) (7, 7a, 7b) pass and which carries the remaining of the said components.

19. Detection unit according to any of claims 13 to 18, **characterized in that** the cover comprises a hinge device, a lever device or a clicking device, by which it can be connected to the sensor and be separated therefrom.

20. Detection unit according to claim 19, **characterized in that** the hinge device, lever device or clicking device is connected to the carrier (11).

21. Detection unit according to any of claims 18 or 20, **characterized in that** the carrier of the cover includes a recess (8) which is part of the hollow space (8).

22. Detection unit according to any of claims 13 to 20, **characterized in that** the cover comprises at least one covering element (6), through which the fluid channel(s) (7, 7a, 7b) pass and which includes a recess (8) in the direction to the sensor, wherein the contact elements (5) are spaced apart from the covering element (6).

23. Detection unit according to any of claims 13 to 21, **characterized in that** the fluid channel(s) (7, 7a, 7b) are sealed by a septum which can be punctured with a hollow needle.

24. Detection unit according to any of claims 8 to 11 and
- at least one contact element (5), wherein each of the contact elements (5) is arranged in such a manner that it may contact a corresponding deflection surface (3) of the sensor.

25. Detection unit according to claim 24, wherein the contact elements (5) are fastened to a carrier (18) which further includes at least one flow channel (16), such that upon connecting the sensor and the carrier (18) each of the contact elements (5) may contact a corresponding deflection surface and each flow channel (16) communicates with a fluid channel (12, 13).

26. Detection unit according to claim 25, wherein each flow channel (16) includes at its lower end at least one sealing element (17) for a detachable sealing connection between the flow channel (16) and the fluid channel (12, 13).

27. Detection unit according to any of claims 25 or 26, **characterized in that** the carrier (18) comprises a hinge device, a lever device or a clicking device, by which it can be connected to the sensor and can be separated therefrom.

28. Detection unit according to any of claims 25 to 27, **characterized in that** each of the flow channels (16) is sealed with a septum which can be punctured with a hollow needle.

29. Detection unit according to any of claims 24 to 28, **characterized in that** the contact elements (5) are pin contacts or spring contacts or **in that** the contact elements (5) are provided as rigid (fixed) contacts.

## Revendications

1. Unité de détection pour la détection de matières contenues dans des liquides avec un capteur, comprenant
- un élément de support (10),
- un élément de capteur (1) fabriqué par la technologie du silicium, sur l'élément de support (10),
- un réseau de capteurs, qui est disposé sur la surface de l'élément de capteur et qui comprend une ou plusieurs électrodes (2), qui sont en contact électrique (4) respectivement avec des faces de décharge correspondantes (3) se trouvant également sur la surface de l'élément de capteur (1) mais qui pour le reste ne sont pas en liaison électrique avec l'élément de support (10),
dans laquelle les électrodes (2) et les faces de décharge (3) sont insérées dans la surface de l'élément de capteur ou sont déposées sur celle-ci sous la forme d'une mince couche métallique, **caractérisée en ce que** l'unité de détection comprend en outre un couvercle, dans laquelle le capteur et le couvercle forment ensemble une cavité (8) au-dessus de la partie de l'élément de capteur sur laquelle se trouve la face ou au moins une face partielle d'une ou de plusieurs desdites électrodes, mais aucune face de décharge, dans laquelle le couvercle présente un canal de liquide pour l'arrivée ou l'aspiration de liquide dans la cavité formée ensemble par le capteur et le couvercle.

2. Unité de détection selon la revendication 1, **caractérisée en ce que** les contacts électriques (4) entre les électrodes (2) et les faces de décharge (3) sont réalisés dans le même plan horizontal que celui de la surface de l'élément de capteur (1).

3. Unité de détection selon la revendication 1, **caractérisée en ce que** les contacts électriques (4) entre des électrodes (2) et des faces de décharge (3) sont également insérés dans la surface de l'élément de capteur ou sont déposés sur celle-ci sous la forme d'une mince couche métallique, de telle manière que toutes les structures mentionnées (2, 3, 4) soient réalisées ensemble ou en séquence et de manière intégrale.

4. Unité de détection selon l'une quelconque des revendications précédentes, **caractérisée en ce que** les contacts électriques (4) entre les électrodes (2) et les faces de décharge (3) sont recouverts par un matériau isolant vers la surface de l'élément de capteur (1).

5. Unité de détection selon la revendication 4, **caractérisée en ce que** l'isolation est réalisée sous la forme d'une mince couche sur les contacts électriques (4).

6. Unité de détection selon la revendication 4 ou 5, **caractérisée en ce que** le matériau isolant vers la surface de l'élément de capteur (1) est un oxyde minéral tel que SiO₂ ou un nitrure ou un oxynitrure comme l'oxynitrure de silicium ou **en ce qu'**il est un matériau synthétique organique ou minéral-organique.

7. Unité de détection selon la revendication 1, dans laquelle les contacts électriques (4) sont noyés dans l'élément de capteur sous la forme de circuits intégrés.

8. Unité de détection selon l'une quelconque des revendications précédentes, dans laquelle le couvercle est conçu comme un élément de recouvrement (6) relié de façon fixe au capteur, qui présente au moins une ouverture de remplissage (12).

9. Unité de détection selon la revendication 8, dans laquelle la cavité (8) est isolée de façon étanche par rapport aux autres parties du capteur au moyen d'éléments d'étanchéité (15).

10. Unité de détection selon la revendication 8 ou 9, **caractérisée en ce que** l'élément de recouvrement (6) est fixé sur l'élément de support (10) et/ou sur l'élément de capteur (1), en particulier par des liaisons collées, et présente une découpe dans la région des faces de décharge (3) de telle manière que les faces de décharge (3) soient ouvertes.

11. Unité de détection selon l'une quelconque des revendications 8 à 10, **caractérisée en ce que** chaque ouverture de remplissage (12) est en liaison avec la cavité (8) par un canal de liquide (13), dans laquelle le ou un ou chaque canal de liquide (13) est en option doté d'une ou de plusieurs niches de réserve (14) destinées à contenir des réactifs de réserve.

12. Unité de détection selon l'une quelconque des revendications 8 à 11, dans laquelle l'élément de recouvrement présente au moins un canal d'arrivée (12, 13) et au moins un canal d'évacuation.

13. Unité de détection selon l'une quelconque des revendications 1 à 7, dans laquelle le couvercle est conçu sous la forme d'un couvercle amovible, qui présente au moins un canal de liquide (7) pour l'arrivée et au moins un élément de contact (5), dans laquelle chacun des éléments de contact (5) est disposé de telle manière qu'il vienne en contact avec une face de décharge correspondante lors de la liaison du capteur et du couvercle.

14. Unité de détection selon la revendication 12, **caractérisée en ce que** les éléments de contact (5) sont des contacts à aiguille ou des contacts à ressort, ou en ce que les éléments de contact (5) sont réalisés sous la forme de contacts rigides.

15. Unité de détection selon la revendication 13 ou 14, **caractérisée en ce que** le couvercle présente au moins un canal d'arrivée et au moins un canal d'évacuation (7a, 7b).

16. Unité de détection selon l'une quelconque des revendications 13 à 15, **caractérisée en ce qu'**il se trouve sur le capteur et/ou sur le couvercle au moins un élément d'étanchéité (9), qui peut garantir, éventuellement avec d'autres éléments d'étanchéité, une isolation étanche au liquide de la cavité.

17. Unité de détection selon la revendication 16, dans laquelle l'élément d'étanchéité est un joint torique ou un film d'étanchéité.

18. Unité de détection selon l'une quelconque des revendications 13 à 17, **caractérisée en ce que** le couvercle comprend un support, à travers lequel passent le ou les canaux de liquide (7, 7a, 7b) et maintient les autres composants mentionnés.

19. Unité de détection selon l'une quelconque des revendications 13 à 18, **caractérisée en ce que** le couvercle comporte un dispositif à clapet, à levier ou à déclic, avec lequel il peut être relié au capteur et avec lequel il peut être séparé de celui-ci.

20. Unité de détection selon la revendication 19, **caractérisée en ce que** le dispositif à clapet, à levier ou à déclic est relié au support (11).

21. Unité de détection selon l'une des revendications 18 ou 20, **caractérisée en ce que** le support du couvercle présente une découpe (8) qui fait partie de la cavité (8).

22. Unité de détection selon l'une quelconque des revendications 13 à 20, **caractérisée en ce que** le couvercle comporte au moins un élément de recouvrement (6), à travers lequel passent le ou les canaux de liquide (7, 7a, 7b) et qui présente une découpe (8) vers le capteur, dans laquelle les éléments de contact (5) sont disposés à distance de l'élément de recouvrement (6).

23. Unité de détection selon l'une quelconque des revendications 13 à 21, **caractérisée en ce que** le ou les canaux de liquide (7, 7a, 7b) sont fermés par un septum, qui peut être percé avec une aiguille creuse.

24. Unité de détection selon l'une quelconque des revendications 8 à 11, qui comporte au moins un élément de contact (5), dans laquelle chacun des éléments de contact (5) est disposé de telle manière qu'il puisse venir en contact avec une face de décharge correspondante (3) du capteur.

25. Unité de détection selon la revendication 24, dans laquelle les éléments de contact (5) sont fixés à un support (18), qui présente en outre au moins un canal de passage (16), de telle manière que, lors de la liaison du capteur et du support (18), chacun des éléments de contact (5) puisse venir en contact avec une face de décharge correspondante et que chaque canal de passage (16) communique avec un canal de liquide (12, 13).

26. Unité de détection selon la revendication 25, dans laquelle chaque canal de passage (16) présente à son extrémité inférieure au moins un élément d'étanchéité (17) pour une liaison étanche amovible du canal de passage (16) et du canal de liquide (12, 13).

27. Unité de détection selon l'une des revendications 25 ou 26, **caractérisée en ce que** le support (18) comporte un dispositif à clapet, à levier ou à déclic, avec lequel il peut être relié au capteur et avec lequel il peut être séparé de celui-ci.

28. Unité de détection selon l'une quelconque des revendications 25 à 27, **caractérisée en ce que** chacun des canaux de passage (16) est fermé avec un septum, qui peut être percé avec une aiguille creuse.

29. Unité de détection selon l'une quelconque des revendications 24 à 28, **caractérisée en ce que** les éléments de contact (5) sont des contacts à aiguille ou des contacts à ressort ou **en ce que** les éléments de contact (5) sont réalisés sous la forme de contacts rigides.
